# EUROPEAN PATENT APPLICATION

(11) **EP 4 645 757 A1**
(43) Date of publication of application: **05.11.2025**
(21) Application number: 23912849.9
(22) Date of filing: 26.12.2023
(51) Int. Cl.: H04L 9/40, G06K 19/06

(54) **ACCOUNT INFORMATION MANAGEMENT METHOD USING MOBILE DEVICE OF USER**

(30) Priority: 28.12.2022 KR 20220188023
(71) Applicant: Estorm Co., Ltd., Geumcheon-gu, Seoul 08589 (KR)
(72) Inventor: WOO, Jong Hyun, Seoul 07365 (KR); KIM, In Soo, Seoul 08521 (KR); JANG, Hyung Suk, Seoul 02190 (KR); LEE, Tai Il, Uiwang-si, Gyeonggi-do 16049 (KR); SHIN, Hee Jun, Seoul 08096 (KR); KIM, Dong Hee, Anyang-si, Gyeonggi-do 14126 (KR); JUNG, Il Jin, Siheung-si, Gyeonggi-do 15120 (KR); YOON, Ji Hye, Seoul 08828 (KR); JEONG, Do Young, Seoul 07771 (KR); CHO, Seung Hyeon, Siheung-si, Gyeonggi-do 15032 (KR)
(74) Representative: Stöckeler, Ferdinand
(86) International application number: PCT/KR2023/021528
(87) International publication number: WO 2024/144174

(57) **Abstract**

Provided is an account information management method using an extension program installed on a web browser, a mobile password manager which is an application program for account information management installed on a mobile device of a user, and an intermediate server communicating with the extension program and the mobile password manager. According to an account information management method according to an embodiment of the present invention, it is possible to enable a user to conveniently manage and automatically input an ID and password set for each online service to be accessed by using a mobile device that he/she possesses, and solve the problem of vulnerability to data theft from external attacks due to server storage of account information and the risk of data theft due to leakage of a master password of account information management software.

## Description

### [Technical Field]

The present invention relates to an account information management method, and more particularly, to an account information management method that enables a user to conveniently manage and automatically input IDs and passwords set for each online service to which a user wishes to access, and is also robust against theft of account information by external attacks.

### [Background Art]

In order to manage accounts for numerous online services, users manage IDs and passwords for each online service they access. Some people record the IDs and passwords in a paper notebook, others record the IDs and passwords on their smartphones, and some install account information management software (hereinafter referred to simply as a password manager) on each PC they use.

Such a password manager stores the ID and password that the user entered when attempting to log in to a specific website using a web browser, and then automatically inputs the stored ID and password when the user attempts to log in to the website again.

The password manager according to the related art has the following two features in terms of its technical structure. First, when a user accesses an online service using multiple PCs or mobile devices, the password manager uploads the user's password to the password management server, and when the user needs to input an ID and password, the user downloads and enters the ID and password from the password management server. Second, in order to prove that the user is a legitimate user of the password manager, a master password of the password manager should be input.

However, due to a server storage method (i.e., centralization of account information management through the server) of the user account information (i.e., ID and password) and the master password usage method described above, when the password management server is attacked from the outside, the account information of all users who have signed up for the service may be stolen at once, or when the master password described above is leaked to a hacker, all the account information of the user may be stolen.

Therefore, an alternative technology is required that achieves decentralization where user account information is not stored on the server, while allowing the user to manage account information in a more secure and convenient way.

### [Disclosure]

### [Technical Problem]

The present invention is to provide an account information management method that enables a user to conveniently manage and automatically input an ID and password set for each online service to be accessed by using a mobile device that he/she possesses.

In addition, the present invention is to provide an account information management method with enhanced security capable of solving the problem of vulnerability to data theft from external attacks due to server storage of account information and the risk of data theft due to leakage of a master password of account information management software.

### [Technical Solution]

According to an aspect of the present invention, there is provided an account information management method using an extension program installed on a web browser, a mobile password manager which is an application program for account information management installed on a mobile device of a user, and an intermediate server communicating with the extension program and the mobile password manager.

According to an embodiment of the present invention, the account information management method may include the steps of: (a) encrypting and managing, by the mobile password manager, account information for each website registered by the user; (b) acquiring, by the mobile password manager, an information recording code generated by the extension program, the information recording code recording website connection information corresponding to either domain information or IP information of the website that the user wishes to access through the web browser; (c) acquiring, by the mobile password manager, the account information corresponding to the domain information recorded in the information recording code based on the account information for each website that is being managed, and transmits the acquired account information to the intermediate server; (d) transmitting, by the intermediate server, the account information received from the mobile password manager to the extension program; and (e) automatically inputting, by the extension program, the account information transmitted from the intermediate server to a login window displayed on the web browser so that the account information corresponding to the website connection information is used for logging in to the website.

### [Advantageous Effects]

According to the account information management method according to an embodiment of the present invention, there is an effect in which the user may conveniently manage and automatically input the ID and password set for each online service to be accessed by using the mobile device that he/she possesses.

The account information management method according to an embodiment of the present invention has an effect that the vulnerability of the data theft from the external attacks due to the server storage of the account information and the risk of the data theft due to the leakage of the master password of the account information management software may be solved.

### [Brief Description of Drawings]

FIG. 1 is a diagram for describing an account information management method using a mobile device of a user according to an embodiment of the present invention.
FIGS. 2 and 3 are diagrams for describing an account information management method using a mobile device of a user according to another embodiment of the present invention.
FIGS. 4 and 5 are examples of a screen of a mobile password manager which is an application program for account information management installed on a mobile device of a user according to an embodiment of the present invention.
FIGS. 6 and 7 are examples of a login screen when an extension program is installed on a web browser according to an embodiment of the present invention.

### [Best Mode]

Since the present invention may be variously modified and have several embodiments, specific embodiments will be illustrated in the accompanying drawings and be described in detail in a detailed description. However, it is to be understood that the present invention is not limited to the specific exemplary embodiments, but includes all modifications, equivalents, and substitutions included in the spirit and the scope of the present invention.

When it is decided that the detailed description of the known art related to the present invention may unnecessarily obscure the gist of the present invention, a detailed description therefor will be omitted. In addition, numbers (for example, first, second, etc.) used in the description process of this specification are only identification symbols for distinguishing one component from other components.

Further, throughout this specification, when it is stated that one component is "connected" or "accessed" to another component, it is to be understood that the one component may be directly connected or directly accessed to the another component, but it may also be connected or accessed to the another component through other components therebetween, unless expressly described otherwise. In addition, throughout this specification, when a part is stated as "include" a component, this means that it may further include other components rather than excluding other components, unless specially described to the contrary. In addition, the term "unit," "module," or the like described in this specification means a processing unit of at least one function or operation, and may be implemented by one or more hardware or software or a combination of hardware and software.

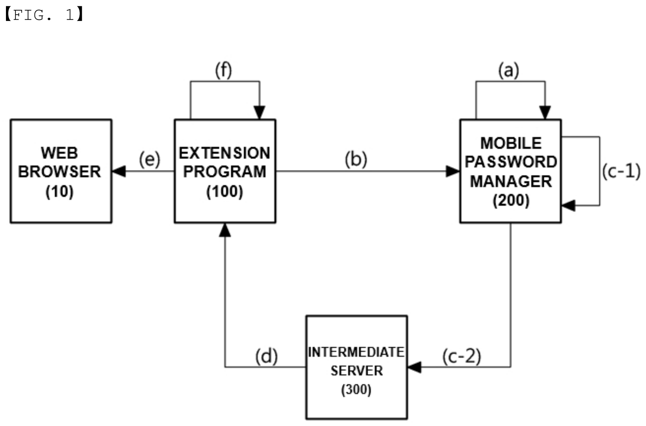

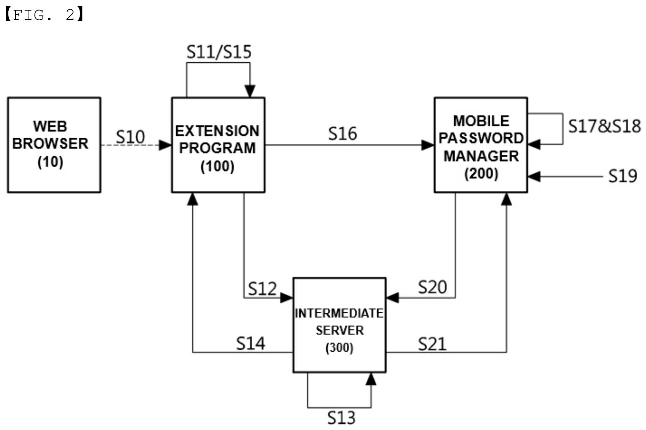

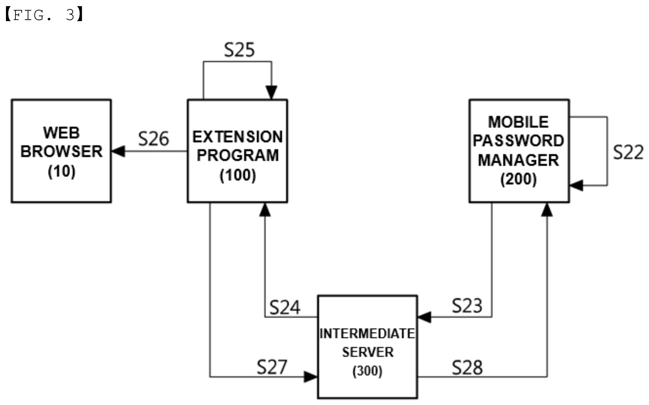

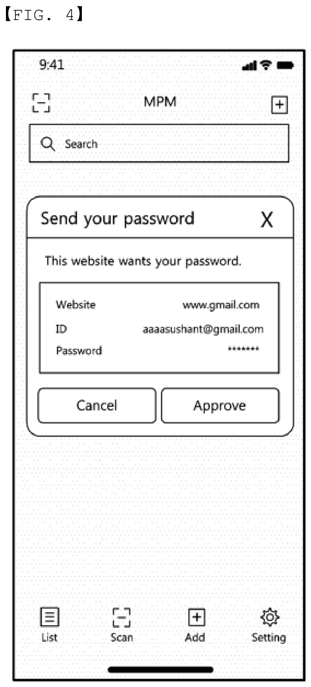

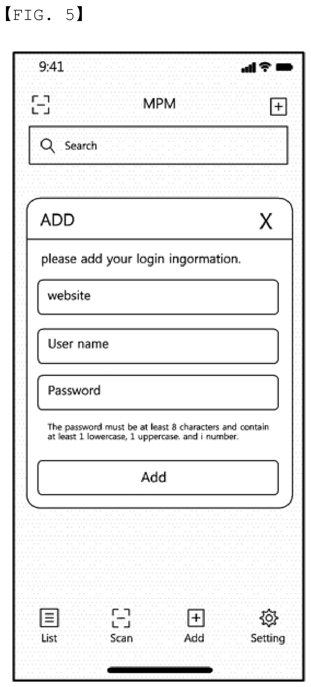

FIG. 1 is a diagram for describing an account information management method using a mobile device of a user according to an embodiment of the present invention, and FIGS. 2 and 3 are diagrams for describing an account information management method using a mobile device of a user according to another embodiment of the present invention. In addition, FIGS. 4 and 5 are examples of a screen of a mobile password manager which is an application program for account information management installed on a mobile device of a user according to an embodiment of the present invention.

Hereinafter, the embodiment of the present invention will be described in detail with reference to the accompanying drawings.

According to the embodiment of the present invention, as shown in FIGS. 1 to 3, for management and automatic input of account information using a mobile device of a user, an extension program 100 which is a program for expanding functions installed on a web browser 10, an application program (hereinafter briefly referred to as a mobile password manager 200) for account information management installed on a mobile device of a user, and an intermediate server 300 linked with the extension program 100 and the mobile password manager 200 are used.

Here, the web browser 10 is a web-based application program for searching for and viewing Internet contents, and is installed on a terminal used by a user. In this case, an access terminal may be a separate terminal from the mobile devices such as a PC and a laptop, and may also be the mobile device itself.

Referring to FIGS. 1 to 3, the account information management method using the mobile device of the user according to the present invention will be described.

The mobile password manager 200 according to the embodiment of the present invention encrypts and manages account information for each website registered by the user (see (a) in FIG. 1).

As described above through the description of the background art, the password management technology of the related art was a method of centralizing and managing user account information (i.e., ID and password) on a server. Accordingly, there was a problem that the account information of all users who signed up for the service was stolen at once when the password management server was attacked from the outside. Therefore, in the embodiment of the present invention, in order to achieve decentralization where the user account information is not stored on a server, the user account information registered for each website is stored and managed by the mobile password manager 200 installed on the mobile device that the user directly possesses.

In an embodiment, the extension program 100 extracts domain information from a website connected to the web browser 10 and generates an asymmetric key when the user selects and activates an extension program installed on the browser after accessing a specific website with a web browser (see S11 in FIG. 2 or (f) in FIG. 1).

In another embodiment, when the extension program installed on the browser is already activated, the extension program monitors the user's website login access attempt (see S10 in FIG. 2), and when the login access attempt such as inputting an ID and password by the user is detected, the extension program may extract domain information from the connected website and generate an asymmetric key (see S11 in FIG. 2 or (f) in FIG. 1).

For example, when the login access screen of the website is displayed through the web browser 10, the extension program 100 may focus and monitor the ID/Password input field on the login access screen. In this case, the extension program 100 may determine that there is an attempt to log in to the website by the user when the user places a cursor on the ID/password input field, etc.

In another example, when a user's gaze staring at the ID/password input field on the login access screen is detected by utilizing the gaze tracking technology, the extension program 100 may determine that there is an attempt to log in to a website by the user.

When the website login access attempt as described above is detected, the extension program 100 extracts domain information (e.g., site URL, etc.) of the website from the web browser 10 and generates the asymmetric key (i.e., public key and private key) to be used in the encryption and decryption process of the user account information in the future. In this example, the domain information of the website is used as an example, but the IP information may also be used as the website connection information that may identify the website.

In an embodiment, the extension program 100 may generate a new asymmetric key whenever the website login access attempt is detected. The method of generating a new asymmetric key whenever the website login access attempt is detected may have an advantageous effect in terms of security. However, depending on the system implementation method, the asymmetric key may be used repeatedly for a specific validity period.

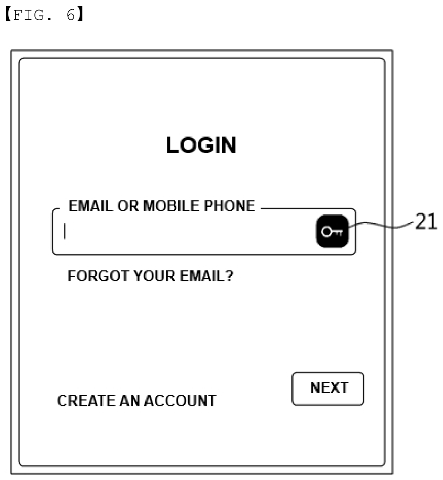

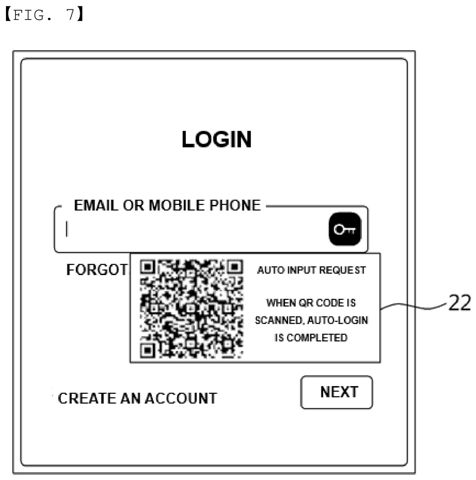

Thereafter, the extension program 100 may generate a quick response (QR) code in which predetermined linkage information for executing an account information management service according to the embodiment of the present invention is recorded (see S15 in FIG. 2), and post a pop-up window so that the generated QR code is displayed on the web browser screen. For example, when a user clicks on reference number 21 of FIG. 6 on the login screen, a pop-up window of reference number 22 of FIG. 7 may be posted.

Thereafter, the user may execute the mobile password manager 200 installed on the mobile device he or she possesses (i.e., execute the app) and scan the QR code using the QR scan function of the mobile password manager 200. Accordingly, the mobile password manager 200 may acquire the linkage information recorded in the QR code by acquiring the QR code generated by the extension program 100 (see (b) in FIG. 1 or S16 in FIG. 2).

In this case, in order to secure the security of the app usage process, a biometric authentication procedure (e.g., smartphone-based facial authentication, fingerprint authentication, etc.) for user authentication may be added before the application execution of the mobile password manager 100.

In this specification, the case where the QR code is generated and displayed as the pop-up is given as an example, but it is obvious that various information recording codes may be utilized in addition thereto. However, for the convenience and focus of describing the present invention, the following description will focus on the case where the QR code is utilized.

In the present invention, the following data may be included as the link information recorded in the QR code for executing the account information management service.

In the first embodiment, the link information recorded in the QR code may include at least one of the domain information of the website to which the user is attempting to log in access and the information corresponding to the public key among the asymmetric keys generated by the extension program 100.

Depending on the system design method, when the mobile password manager 200 does not store server information or intermediate channel information regarding the intermediate server 300 that relays the process of transmitting the user account information to the extension program 100, the server information or intermediate channel information regarding the intermediate server 300 that operates by being linked with the extension program 100 for executing the account information management service may further be included in the linkage information. Here, the intermediate channel information will be determined according to the type of communication protocol used for transmitting and receiving data between the extension program 100 and the intermediate server 300, and may include, for example, a web push ID, a web socket ID, a firebase cloud messaging (FCD) ID, etc.

As described above, when the domain information and the public key information are recorded in the QR code, the mobile password manager 200 may acquire the account information corresponding to the domain information recorded in the QR code by referring to the account information or the account information list for each managed website (see (c-1) in FIG. 1 or S17 in FIG. 2).

In this case, when the account information corresponding to the domain information does not exist, the account information may be added to the mobile password manager 200 through an account information addition input window such as the screen example of FIG. 5.

As described above, when the account information corresponding to the domain information is acquired, the mobile password manager 200 may display the corresponding account information or list on the app screen so that the user may select the account information to be used (see S19 in FIG. 2).

In this case, since the account information is originally in an encrypted state and then displayed on the app screen in a decrypted state, it goes without saying that the biometric authentication procedure (e.g., smartphone-based facial authentication or fingerprint authentication, etc.) for user authentication may be added before the time of decrypting the account information or before the time of the user approving the transmission of the account information, depending on the app design method or security reasons.

Accordingly, the mobile password manager 200 may transmit the account information selected by the user to the intermediate server 300 (see (c-2) in FIG. 1 or S23 in FIG. 3). An example of the app screen related thereto is shown in FIG. 4.

In this case, the mobile password manager 200 may encrypt the account information selected by the user and transmit the account information to the intermediate server 300. That is, the mobile password manager 200 may encrypt the account information selected by the user using the public key recorded in the QR code (see S22 in FIG. 3) and then transmit the account information in the encrypted state to the intermediate server 300.

Thereafter, the intermediate server 300 transmits the encrypted account information received from the mobile password manager 200 to the extension program 100 (see (d) in FIG. 1 or S24 in FIG. 3).

Accordingly, the extension program 100 decrypts the encrypted account information transmitted from the mobile password manager 200 through the intermediate server 300 using the private key among the asymmetric keys (see S25 in FIG. 3). In addition, the extension program 100 automatically inputs the decrypted account information to the login window displayed on the web browser so that the decrypted account information may be used for the login access to the corresponding website (see (e) in FIG. 1 or S26 in FIG. 3).

When the account information is automatically input through the above-described process, the results may be guided to the mobile password manager 200 through the intermediate server 300 (see S27 and S28 in FIG. 3).

In addition, the extension program 100 may erase the pop-up QR code and terminate the channel with the intermediate server 300 when the website is changed or the ID/password input field disappears on the screen (i.e., the screen is switched from the website login access screen to another screen).

In the above, the case where the public key is directly recorded together with the domain information in the QR code has been mainly described, but according to the second embodiment of the present invention, a different method may be used due to the data capacity limitation of the QR code. This will be described with reference to S12, S13, S14, S20, and S21 in FIG. 2.

According to the second embodiment, the extension program 100 may transmit the public key among the asymmetric keys generated through S11 in FIG. 2 to the intermediate server 300 (see S12 in FIG. 2). Accordingly, the intermediate server 300 may store the public key received from the extension program 100 (see S13 in FIG. 2) and transmit the channel URL information that may confirm the storage location of the public key to the extension program 100 (see S14 in FIG. 2).

Accordingly, the extension program 100 may generate the QR code in which the domain information of the website and the channel URL information are recorded through step S15 in FIG. 2, and post the pop-up window so that the generated QR code is displayed as the pop-up on the web browser screen.

In this case, the mobile password manager 200 may request the public key information to the intermediate server 300 based on the channel URL information recorded in the QR code (see S20 in FIG. 2), acquire the public key information provided from the intermediate server 300 (see S21 in FIG. 2), use the acquired public key information to encrypt the user account information through step S22 in FIG. 2, and then transmit the encrypted user account information to the extension program through the intermediate server.

Although the embodiments of the present invention have been disclosed hereinabove, it may be understood by those skilled in the art that the present invention may be variously modified and altered without departing from the scope and spirit of the present invention described in the following claims.

## Claims

1. An account information management method using an extension program installed on a web browser, a mobile password manager which is an application program for account information management installed on a mobile device of a user, and an intermediate server communicating with the extension program and the mobile password manager, the account information management method, comprising:
(a) encrypting and managing, by the mobile password manager, account information for each website registered by the user;
(b) acquiring, by the mobile password manager, an information recording code generated by the extension program, the information recording code recording website connection information corresponding to either domain information or IP information of the website that the user wishes to access through the web browser;
(c) acquiring, by the mobile password manager, the account information corresponding to the website connection information recorded in the information recording code based on the account information for each website that is being managed, and transmitting the acquired account information to the intermediate server;
(d) transmitting, by the intermediate server, the account information received from the mobile password manager to the extension program; and
(e) automatically inputting, by the extension program, the account information transmitted from the intermediate server to a login window displayed on the web browser so that the account information corresponding to the website connection information is used for logging in to the website.

2. The account information management method of claim 1, further comprising:
before the (b), (f) monitoring, by the extension program, a user's website login attempt using the web browser when the extension program is activated by a user's selection or is already activated, and extracting the website connection information or generating an asymmetric key when the website login attempt by the user is detected.

3. The account information management method of claim 2, further comprising:
a quick response (QR) code is used as the information recording code, but after the (f) and before the (b), generating, by the extension program, the QR code in which the website connection information and public key information among the asymmetric keys are recorded, and posting a pop-up window so that the generated QR code is displayed on a web browser screen.

4. The account information management method of claim 2, further comprising:
a quick response (QR) code is used as the information recording code, but after the (f) and before the (b),
transmitting, by the extension program, a public key among the generated asymmetric keys to the intermediate server;
storing, by the intermediate server, the public key received from the extension program and transmitting channel URL information confirming a storage location of the public key to the extension program;
generating, by the extension program, the QR code in which the website connection information and the channel URL information are recorded and posting a pop-up window so that the generated QR code is displayed on a web browser screen; and
after the (b), acquiring, by the mobile password manager, the public key generated by the extension program based on the channel URL information recorded in the QR code.

5. The account information management method of claim 3 or 4, wherein in the (c), the mobile password manager encrypts the account information corresponding to the website connection information recorded in the QR code using the public key generated by the extension program, and then transmits the encrypted account information to the intermediate server.

6. The account information management method of claim 5, wherein in the step (e), the extension program receives the encrypted account information from the mobile password manager through the intermediate server, decrypts the encrypted account information using a private key among the asymmetric keys, and automatically inputs the decrypted account information into the login window displayed on the web browser.

7. The account information management method of claim 2, wherein in the (f), the extension program newly generates the asymmetric key whenever the user selects to activate the extension program or recognizes an ID and password input window in a main text of the website to detect an access attempt to log in to the website.

8. The account information management method of claim 1, wherein a biometric authentication procedure for authenticating the user using the mobile password manager is added before at least one of a time of application execution of the mobile password manager, a time of displaying the account information on an app screen through the mobile password manager, and a time of user approval of account information transmission.
